# EUROPEAN PATENT APPLICATION

(11) **EP 4 481 898 A1**
(43) Date of publication of application: **25.12.2024**
(21) Application number: 24180634.8
(22) Date of filing: 07.06.2024
(51) Int. Cl.: H01M 10/658, H01M 50/204, H01M 50/293

(54) **BATTERY MODULE, MANUFACTURING METHOD THEREOF, AND BATTERY PACK COMPRISING THE BATTERY MODULE**

(30) Priority: 21.06.2023 KR 20230079352
(71) Applicant: Samsung SDI Co., Ltd., Yongin-si, Gyeonggi-do 17084 (KR)
(72) Inventor: YANG, Seung Yong, 17084 Yongin-si, Gyeonggi-do (KR); WOO, Myung Heui, 17084 Yongin-si, Gyeonggi-do (KR); RA, Ha Na, 17084 Yongin-si, Gyeonggi-do (KR); RYU, Bo Kyung, 17084 Yongin-si, Gyeonggi-do (KR); LEE, Jae Hyun, 17084 Yongin-si, Gyeonggi-do (KR); PARK, Hye Jin, 17084 Yongin-si, Gyeonggi-do (KR)
(74) Representative: Gulde & Partner

(57) **Abstract**

Example embodiments include a battery module including a plurality of cells, an insulation sheet between the plurality of cells, the insulation sheet having an upper surface and a lower surface that face cells adjacent thereto, respectively, and a foam layer formed on two or more side surface .portions, including an upper side surface .portion, of a border side surface between the upper surface and the lower surface of the insulation sheet. Example embodiments also include a method of manufacturing the battery module, and a battery pack including the battery module.

## Description

### BACKGROUND

### 1. Field

Example embodiments relate to a battery module, a method of manufacturing the same, and a battery pack including the battery module.

### 2. Description of the Related Art

A secondary battery is a power storage system that converts electrical energy into chemical energy, stores the chemical energy, and provides high energy density. Compared to a primary battery, which is not rechargeable, a secondary battery is typically rechargeable and is widely used in information technology (IT) devices such as, e.g., smartphones, cellular phones, laptop computers, tablet computers, and the like. There is currently an increased interest in electric vehicles to reduce or prevent environmental pollution, and high-capacity secondary batteries are often adopted in electric vehicles. Secondary batteries typically exhibit desirable characteristics such as, e.g., high density, high output, and stability.

When a plurality of high-capacity cells is included, as in a lithium ion secondary battery, one cell may overheat and may go into thermal runaway for various reasons, which may adversely affect other cells adjacent thereto, and therefore it is desirable to thermally isolate neighboring cells from each other.

Conventionally, a plate or an insulating resin sheet is located between cells to isolate and insulate neighboring cells from each other.

### SUMMARY

Example embodiments include a battery module having desired, advantageous or improved thermal insulation, fire resistance, and flame retardancy or non-flammability to reduce or inhibit propagation of heat in a cell to cells adjacent thereto due to thermal runaway of the cell, a method of manufacturing the battery module, and a battery pack including the battery module.

An example embodiment includes a battery module including a plurality of cells, an insulation sheet between the plurality of cells, the insulation sheet having an upper surface and a lower surface that face cells adjacent thereto, respectively, and a foam layer formed on two or more side surface portions, including an upper side surface portion, of a border side surface between the upper surface and the lower surface of the insulation sheet.

Each, or one or more, of the cells may be a secondary battery cell.

The insulation sheet may include a first substrate, a second substrate, and an aerogel layer between the first substrate and the second substrate.

Each, or one or more, of the first substrate and the second substrate may be made of or include at least one of a resin, a metal, and an inorganic material other than the metal.

The aerogel layer may include at least one of an aerogel, a fibrous support, and a functional material including a binder, a dispersant, or a combination thereof.

The aerogel may have a Brunauer, Emmett and Teller (BET) specific surface area in a range of about 500 m²/g to 1,000 m²/g, preferably in a range of about 700 m²/g to 800 m²/g.

The fibrous support may be at least one of natural fiber, silica fiber, glass fiber, ceramic fiber, carbon fiber, graphite fiber, mineral fiber, and polymer fiber.

The binder may include an aqueous polymer binder.

The dispersant may be or include at least one of a surfactant, a silane coupling agent, and a phosphate-based salt.

The aerogel may be included so as to account for a range of about 10 wt% to 90 wt%, the fibrous support may be included so as to account for a range of about 5 wt% to 70 wt%, preferably 20 wt% to 50 wt% and the functional material may be included so as to account for a range of about 0.5 wt% to 20 wt%, preferably 5.0 wt% to 15 wt% based on the total amount of the aerogel layer.

The foam layer may include a foam material configured to foam when the ambient temperature increases to a range of about 100 °C to 200 °C, preferably 130 °C to 170 °C.

The foam layer may be a foaming agent including at least one of expanded graphite, an organic foaming agent, and an inorganic foaming agent.

The organic foaming agent may be or include at least one of azodicarbonamide, dinitropentamethylenetetramine, and oxybis(benzenesulfonyl hydrazide), and the inorganic foaming agent may be or include at least one of hydrogen carbonate, carbonate, and salts of organic acids.

The thickness of the foam layer may be in a range of about 3% to 20%, preferably 7% to 17% of the thickness of the insulation sheet.

The thickness of the foam layer after foaming may be in a range of about 1000% to 3000%, preferably 1500% to 2500%of the thickness of the foam layer before foaming.

The foam layer may be formed on opposite side surface portions of the side surface of the insulation sheet that face upward and downward or the substantially entirety of the side surface of the insulation sheet.

The thickness of the foam layer formed on the upper side surface portion of the side surface of the insulation sheet may be at least about 100% of the thickness of the foam layer formed on a lower side surface portion of the side surface of the insulation sheet.

Another example embodiment includes a method of manufacturing a battery module, the method including disposing a plurality of cells, disposing an insulation sheet between the plurality of cells such that an upper surface and a lower surface of the insulation sheet face cells adjacent thereto, respectively, and forming a foam layer on two or more side surface portions, including an upper side surface portion, of a border side surface between the upper surface and the lower surface of the insulation sheet.

Forming the foam layer may be performed before or after disposing the insulation sheet between the plurality of cells.

A further example embodiment includes a battery pack including the battery module.

### BRIEF DESCRIPTION OF THE DRAWINGS

When the terms "about" or "substantially" are used in this specification in connection with a numerical value, it is intended that the associated numerical value include a tolerance of ±10% around the stated numerical value. Moreover, when reference is made to percentages in this specification, it is intended that those percentages are based on weight, i.e., weight percentages. The expression "up to" includes amounts of zero to the expressed upper limit and all values therebetween. When ranges are specified, the range includes all values therebetween such as increments of 0.1%.

The accompanying drawings, which are incorporated in this specification, illustrate example embodiments and serve to further illustrate the technical ideas of the disclosure in conjunction with the detailed description of example embodiments that follows, and the disclosure is not to be construed as limited to what is shown in such drawings. In the drawings:
FIG. 1 is a schematic view showing the structure of a battery module according to an example embodiment;
FIG. 2 is a schematic view showing a foam layer in the battery module according to the example embodiment of FIG. 1 after foaming; and
FIG. 3 is a schematic view showing the sectional structure of an insulation sheet according to an example embodiment.

### DETAILED DESCRIPTION OF EXEMPLARY EMBODIMENTS

Hereinafter, example embodiments are described in detail such that a person having ordinary skill in the art can easily implement the example embodiments. However, example embodiments may be implemented in many different forms and are not limited to the example embodiments described herein..

A battery module according to an example embodiment may include a plurality of cells, an insulation sheet provided between the plurality of cells, the insulation sheet having an upper surface and a lower surface that face cells adjacent thereto, respectively, and a foam layer on two or more side surface portions, including an upper side surface portion, of a border side surface between the upper surface and the lower surface of the insulation sheet.

The battery module having the above structure may have desired, advantageous or improved thermal insulation, fire resistance, and flame retardancy or non-flammability, thereby reducing or inhibiting propagation of heat and flames in a cell to cells adjacent thereto due to thermal runaway of the cell. The insulation sheet may have desired, advantageous or improved compressibility, mechanical strength, and dimensional stability, and may reduce or prevent detachment of an aerogel layer due to, e.g., external impact, thereby improving workability and reducing or preventing contamination of an instrument.

In an example embodiment, the cell may be a secondary battery cell. The secondary battery cell may be or include, for example, a lithium secondary battery. The lithium secondary battery may be manufactured in various forms, such as a lithium ion battery, an all-solid-state battery, or a lithium metal battery. For example, the lithium secondary battery may have a structure in which a positive electrode plate having a positive electrode active material applied thereto and a negative electrode plate having a negative electrode active material applied thereto are arranged such that a separator is interposed therebetween, and the lithium secondary battery may be received in a battery case together with an electrolytic solution in a sealed state to constitute a secondary battery cell. Depending on the shape of the battery case, the secondary battery cell may be classified as, e.g., a cylindrical secondary battery cell, a prismatic secondary battery cell, or a pouch-shaped secondary battery cell, and a plurality of secondary battery cells may be connected to each other in series or in parallel to constitute a battery module.

The secondary battery cell may require a substantially high degree of stability, e.g., when overcharged, the positive electrode active material or an electrolyte may be subjected to decomposition and other side reactions, whereby heat may be emitted from the secondary battery, resulting in explosion of the secondary battery cell.

In a battery module according to an example embodiment, an insulation sheet may be located between cells, and a foam layer may be located at a side surface of the insulation sheet, whereby the battery module may have desired, advantageous or improved thermal insulation, fire resistance, and flame retardancy or non-flammability, and therefore it is possible to reduce or inhibit propagation of heat and flames in a cell to cells adjacent thereto due to thermal runaway of the cell.

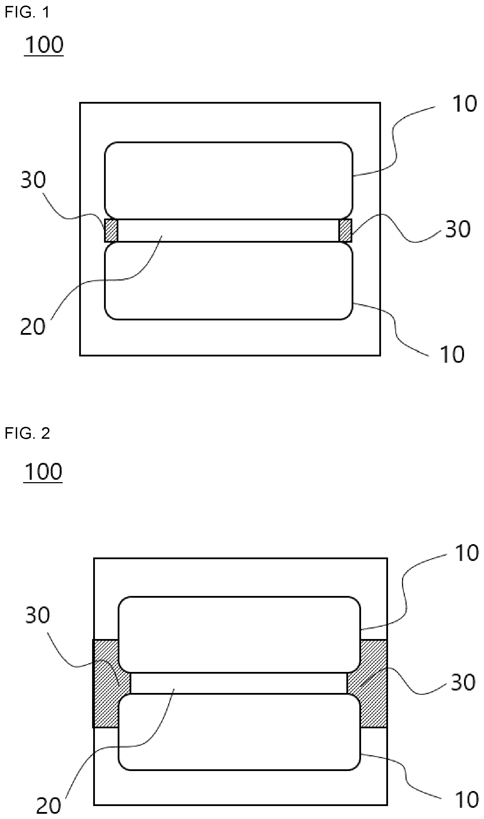

FIG. 1 is a schematic view showing a battery module having an insulation sheet located between a plurality of cells and a foam layer formed on a side surface of the insulation sheet, according to an example embodiment.

Referring to FIG. 1, a battery module 100 according to an example embodiment may include a plurality of cells 10 and may include an insulation sheet 20 between the plurality of cells 10..The insulation sheet 20 may be disposed such that an upper surface and a lower surface of the insulation sheet 20 face cells 10 adjacent thereto, respectively. The battery module may further include a foam layer 30 formed on .a side surface of the insulation sheet 20. The foam layer 30 may be formed of two or more side surface portions may include an upper side surface portion. Wherein the "upper side surface portion" may mean a surface (a surface the one of the foam layer 30 is formed in FIG. 1 and 2) formed at the upward direction of the side surface portion based on the form in which the insulation sheet is disposed. Thus, it is possible to provide a battery module with increased safety by hindering or blocking flames in advance in the event of thermal runaway of one cell to substantially reduce or inhibit propagation of the flames to other cells, and further to provide a secondary battery pack including the battery module.

FIG. 2 is a schematic view showing that a foam layer foams and spreads at a given temperature or higher.

Referring to FIG. 2, a battery module 100 according to an example embodiment may include a plurality of cells 10, and may include an insulation sheet 20 between the plurality of cells 10, wherein a foam layer 30 may be formed on a side surface of the insulation sheet 20..When the ambient temperature increases to a given temperature or higher due to thermal runaway, the foam layer 30 may spread and fill an empty space in the battery module 100 to reduce or prevent flame propagation.

In an example embodiment, the insulation sheet may include a first substrate, a second substrate, and an aerogel layer between the first substrate and the second substrate. The first substrate and the second substrate may form an upper surface and a lower surface of the insulation sheet, respectively, and may face cells adjacent thereto, respectively.

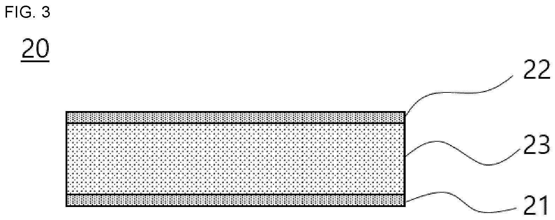

FIG. 3 is a schematic view showing the structure of an insulation sheet according to an example embodiment.

Referring to FIG. 3, the insulation sheet 20 may be formed so as to have a structure including a first substrate 21, a second substrate 22, and an aerogel layer 23 between the first substrate 21 and the second substrate 22..The first substrate 21 and the second substrate 22 may form an upper surface and a lower surface of the insulation sheet 20, respectively, and may be face the cells 10 illustrated in FIGS. 1 and 2 adjacent thereto, respectively.

Each, or one or more, of the first substrate and the second substrate may be made of or include at least one of, without being limited to, a resin, a metal, an inorganic material other than the metal, or may be made of or include a composite thereof. The form of the substrate may be, without being limited to, a film, a membrane, a sheet, etc.

The resin may be at least one of, for example, polyethylene, polypropylene, polystyrene, polyethylene terephthalate, and polyamide.

The metal may be at least one of, for example, copper, nickel, cobalt, iron, chromium, vanadium, palladium, ruthenium, rhodium, molybdenum, tungsten, iridium, silver, gold, and platinum. When a substrate made of or including the above metal is used, the substrate may be subjected to anti-corrosion treatment or insulating treatment as needed.

The inorganic material may be at least one of calcium carbonate (CaCOs), talc, and mica.

As an example, each of the first substrate and the second substrate may include an inorganic material, and as another example, the substrate may include mica. In this case, thermal insulation, durability, etc. of the insulation sheet may be improved.

The aerogel layer may include at least one of an aerogel, a fibrous support, and a functional material including a binder, a dispersant, or a combination thereof.

The aerogel may have a BET specific surface area in a range of about 500 m²/g to 1,000 m²/g.. For example, the aerogel may have a BET specific surface area in a range of about 500 m²/g to 950 m²/g, 550 m²/g to 950 m²/g, or 600 m²/g to 900 m²/g. .Because the aerogel having the BET specific surface area value within the above range is included, scattering of aerogel particles may be reduced or prevented and thermal insulation may be improved.

The average particle size of the aerogel may be in a range of about 5 µm to 200 µm, 10 µm to 100 µm, or 20 µm to 60 µm. .Because the aerogel having the particle size within the above range is included, thermal insulation may be improved, whereby heat transfer between the plurality of cells may be delayed.

The content of the aerogel may be in a range of about 10 wt% to 90 wt%, 30 wt% to 70 wt%, or 40 wt% to 60 wt%, based on the total amount of the aerogel layer. When the aerogel within the above range is included, thermal insulation of the insulation sheet may be desired, advantageous or improved.

The aerogel, which is a transparent or translucent advanced material having a nanoporous structure, exhibits low density and low thermal conductivity, and therefore aerogel may be advantageous as an insulating material and is considered to be a highly efficient super insulating material that can be used in a variety of industrial applications.

A significant advantage of the aerogel of the example embodiments is that the aerogel has a lower thermal conductivity than conventional organic insulating materials such as, e.g., Styrofoam, and that the aerogel is capable of overcoming critical weaknesses of organic insulating materials, such as, e.g., fire vulnerability and generation of harmful gases in the event of fire.. In various instances, the aerogel may be substantially brittle, readily breakable upon slight impact, and challenging to process into small thicknesses and shapes, making it challenging to manufacture an insulation material using the aerogel alone despite a desired, advantageous or improved thermal insulation. In an example embodiment, a fibrous support and a functional material including a binder, dispersant, or a combination thereof may be included to improve durability of the aerogel layer and to reduce or prevent dust from being generated during external impact or operation.

The fibrous support may be included in the aerogel layer, whereby durability of the insulation sheet formed using the aerogel may be improved.

The fibrous support may include fiber used as a support made of or including an ordinary insulating material. For example, the fibrous support may be at least one of natural fiber, silica fiber, glass fiber, carbon fiber, graphite fiber, mineral fiber, and polymer fiber. As another example, the fibrous support may include, without being not limited to, glass fiber.

The natural fiber may be at least one of, for example, hemp, jute, flax, coir, Kenaf, and cellulose.

The mineral fiber may be at least one of, for example, basalt, quartzite, alumina, silica, slag, and rock.

The polymer fiber may be at least one of, for example, nylon, polyimide, polyamide, polybenzimidazole, polybenzoxazole, polyamideimide, polyethylene terephthalate, polybutylene terephthalate, polyester, polyethylene (PE), and polypropylene (PP)..As an example, the polymer fiber may be at least one of, without being limited to, polyimide, polyamide, and polybenzimidazole.

The fibrous support may be, for example, in the form of wool or chopped strands, but is not limited thereto.

The diameter of the fibrous support may be, for example, in a range of about 0.1 µm to 20 µm, 0.1 µm to 15 µm, 0.1 µm to 5 µm, 1 µm to 15 µm, or 3 µm to 10 µm. .By including a fibrous support having a diameter within the above range, the structure of the aerogel layer may be stiffened, and manufacturing costs may be reduced.

The content of the fibrous support may be in a range of about 5 wt% to 70 wt%, 25 wt% to 60 wt%, or 30 wt% to 50 wt%, based on the total amount of the aerogel layer. When an insulation sheet is manufactured using an aerogel layer including a fibrous support within any of the above ranges, durability may be improved.

The binder may include an aqueous polymer binder. . For example, the aqueous polymer binder may be at least one of a water-based polymer, an anionic water-soluble polymer, a cationic water-soluble polymer, and a water-dispersible polymer.

The water-based polymer may be at least one of, for example, without being limited to, polyvinyl alcohol, polyethylene oxide, polyacrylamide, and polyvinylpyrrolidone.

The anionic water-soluble polymer may be at least one of carboxylic acid, sulfonic acid, sulfuric acid ester, phosphoric acid ester, and a polymer having functional groups of salts thereof. .For example, the anionic water-soluble polymer may be a polymer having a carboxylic acid group, and may include, without being limited to, polymaleic acid as a specific example.

The cationic water-soluble polymer may be at least one of amine, ammonium, phosphonium, sulfonium, and a polymer having functional groups of salts thereof. For example, the cationic water-soluble polymer may be a polymer having an amine group, and may be at least one of, without being limited to, polyethylene amine and polyamine as a specific example.

The water-dispersible polymer may be, without being limited to, at least one of water-dispersible polyurethane and water-dispersible polyester.

The binder may include at least one of a water-based polymer and a water-dispersible polymer.. For example, the binder may include a water-based polymer having binder properties and dispersing properties, and a water-dispersible polyurethane having fire-resistant properties. As an example, the binder may include polyvinyl alcohol and water-dispersible polyurethane.

The weight ratio of the water-based polymer to the water-dispersible polymer may be in a range of about 1:1 to 1:5, 1:1 to 1:4, or 1:2 to 1:3..When the weight ratio of the water-based polymer to the water-dispersible polymer is within any one of the above ranges, fire resistance and mechanical properties of the insulation sheet may be further improved in addition to the thermal insulation, dustiness, and compression properties of the insulation sheet.

The content of the binder may be in a range of about 0.5 wt% to 20 wt%, 2 wt% to 15 wt%, or 8 wt% to 15 wt%, based on the total amount of the aerogel layer. .An insulation sheet including an aerogel layer that includes a binder within the above range may have improved dustiness.

The dispersant may be at least one of a surfactant, a silane coupling agent, and a phosphate-based salt. For example, the dispersant may include at least one of, without being limited to, a non-ionic surfactant, an anionic surfactant, an amphoteric surfactant, a natural surfactant such as lecithin, and phosphate.

Further inclusion of the dispersant may further improve the dispersion of the aerogel during manufacture of the aerogel layer, resulting in a substantially even dispersion of the fibrous support and the aerogel.

The content of the dispersant may be in a range of about 0.1 wt% to 6 wt%, 0.1 wt% to 5 wt%, or 0.1 wt% to 3 wt%, based on the total amount of the aerogel layer. When the dispersant is included within any one of the above ranges, it is possible to manufacture the aerogel layer at low cost and to manufacture an insulation sheet having desired, advantageous or improved thermal insulation, uniformity, and dustiness using the same.

In an example embodiment, the binder and the dispersant may be included in a weight ratio in a range of about 1:0.001 to 1:0.67, 1:0.001 to 1:0.5, or 1:0.001 to 1:0.3. .Mixing the binder and the dispersant in a weight ratio within the above range may result in a more uniform dispersion of the aerogel in the aerogel layer.

In an example embodiment, the fibrous support may be included so as to account for a range of about 25 wt% to 60 wt%, the aerogel may be included so as to account for a range of about 30 wt% to 70 wt%, and the binder may be included so as to account for a range of about 2 wt% to 15 wt%, based on the total amount of the aerogel layer.

As an example, the fibrous support may be included so as to account for a range of about 30 wt% to 50 wt%, the aerogel may be included so as to account for a range of about 40 wt% to 60 wt%, and the binder may be included so as to account for a range of about 8 wt% to 15 wt%, based on the total amount of the aerogel layer. When the aerogel layer is formed within any one of the above ranges, it is possible to realize desired, advantageous or improved thermal insulation while improving durability, and it is possible to improve the binding between the fibrous support and the aerogel, thereby reducing or preventing dust generation.

In an example embodiment, the fibrous support may be included so as to account for a range of about 25 wt% to 60 wt%, the aerogel may be included so as to account for a range of about 30 wt% to 70 wt%, the binder may be included so as to account for a range of about 2 wt% to 15 wt%, and the dispersant may be included so as to account for a range of about 0.1 wt% to 3 wt%, based on the total amount of the aerogel layer.

As an example, the fibrous support may be included so as to account for a range of about 30 wt% to 50 wt%, the aerogel may be included so as to account for a range of about 40 wt% to 60 wt%, the binder may be included so as to account for a range of about 5 wt% to 10 wt%, and the dispersant may be included so as to account for a range of about 0.1 wt% to 2 wt%, based on the total amount of the aerogel layer. When the aerogel layer is formed within the above range, it is possible to realize desired, advantageous or improved thermal insulation while improving durability, and it is possible to improve the binding between the fibrous support and the aerogel, thereby reducing or preventing dust generation.

In an example embodiment, the foam layer may include a foam material formed on two or more side surface portions, including an upper side surface portion, of a border side surface between the upper surface and the lower surface of the insulation sheet, the foam material being configured to foam when the ambient temperature increases to about 100 °C or higher. For example, the foam material may foam when the ambient temperature increases to a range of about 100 °C to 200 °C, 120 °C to 180 °C, or 120 °C to 170 °C, and the thickness of the foam layer may increase due to an increase in volume thereof to fill the empty space in the battery module, thereby reducing or preventing the propagation of flames.

The foam layer may be formed on opposite side surface portions of the side surface of the insulation sheet that face upward and downward or substantially the entirety of the side surface of the insulation sheet.."Upward" and "downward" may mean upward and downward directions based on the form in which the insulation sheet is disposed.

The insulation sheet may include an upper surface, a lower surface, and a border side surface between the upper surface and the lower surface. When the upper surface and the lower surface of the insulation sheet face cells adjacent thereto, respectively, the border side surface of the insulation sheet may include an upper side surface portion, a lower side surface portion, a front side surface portion, and a rear side surface portion. The foam layer may be formed on opposite side surface portions of the side surface of the insulation sheet that face upward and downward, i.e., the upper side surface portion and the lower side surface portion, or substantially the entirety of the side surface of the insulation sheet. As an example, the foam layer may be essentially formed on the upper side surface portion of the border side surface of the insulation sheet.

In the battery module, the foam layer may be formed so as to cover a portion or substantially the entirety of an externally exposed portion of the surface of the insulation sheet that does not face the cell.

In the battery module, the foam layer may be formed so as to further cover a portion or substantially the entirety of the cell adjacent to the insulation sheet.

As an example, the foam layer may be formed on substantially the entirety of the side surface of the insulation sheet. In this case, in the event of thermal runaway of one cell, the foam component may form and expand to fill the empty space in the battery module in addition to the space in which the cells, the insulation sheet, and the foam layer are located, thereby reducing or preventing flame propagation.

As another example, the foam layer may be formed on opposite side surface portions of the side surface of the insulation sheet that face upward and downward. In this case, installation of the foam layer may be reduced or minimized while effectively reducing or preventing flame propagation.

The foam layer may be formed so as to have a thickness equivalent to a range of about 3% to 20%, 5% to 15%, or 5% to 10% of the thickness of the insulation sheet..By forming a foam layer so as to have a thickness within any one of the above ranges, it is possible to reduce or prevent the propagation of flames in the event of thermal runaway of one cell.

The thickness of the foam layer after foaming may be in a range of about 1000% to 3000%, 1300% to 2500%, or 1700% to 2300% of the thickness of the foam layer before foaming. The foam layer may foam when the ambient temperature rises to a given level or higher, whereby the thickness of the foam layer after foaming may become a range of about 10 times to 30 times, 13 times to 25 times, or 17 times to 23 times the thickness of the foam layer before foaming.

The battery module may include an empty space therein in addition to the space in which the cells, the insulation sheet, and the foam layer are disposed, and the thickness of the foam layer after foaming may be in a range of about at least 200%, 200% to 500%, or 200% to 400% of the height of the empty space formed in an upper portion of the battery module. The thickness of the foam layer after foaming may be in a range of about at least 2 times, 2 to 5 times, or 2 to 4 times the height of the empty space formed in the upper portion of the battery module.

The thickness of the foam layer formed on the upper side surface portion of the side surface of the insulation sheet may be in a range of about at least 100%, 100% to 400%, 150% to 350%, or 200% to 350% of the thickness of the foam layer formed on the lower side surface portion of the side surface of the insulation sheet. The thickness of the foam layer formed on the upper side surface portion of the side surface of the insulation sheet may be in a range of about at least 1 .time, 1 times to 4 times, 1.5 times to 3.5 times, or 2 times to 3.5 times the thickness of the foam layer formed on the lower side surface portion of the side surface of the insulation sheet..By controlling the ratio between the thicknesses of the foam layer formed on the upper side surface portion and the lower side surface portion of the side surface of the insulation sheet as described above, it is possible to effectively reduce or prevent the propagation of flames in the event of thermal runaway in one cell.

The foam layer may be made of or include a foam material that foams and expands in volume when the ambient temperature increases to range of about 100 °C to 200 °C, 120 °C to 180 °C, or 120 °C to 170 °C, and the foam material may include a foaming agent including at least one of, for example, expanded graphite, an organic foaming agent, and an inorganic foaming agent..

The organic foaming agent may be or include at least one of azodicarbonamide (ADCA), N,N'-dinitropentamethylenetetramine (DPT), and 4,4'-oxybis(benzenesulfonyl hydrazide) (OBSH)..The inorganic foaming agent may be or include at least one of hydrogen carbonate, carbonate, and salts of organic acids.

The foam material may be mixed with a polymer material to form a coating solution. The polymer material may not be particularly restricted as long as the polymer material can control the thickness of the foam layer after foaming and the foam trigger temperature of the foam material..For example, the polymer material may be at least one of polyimide, polyamide, polybenzimidazole, polybenzoxazole, polyamideimide, polyurethane, polyethylene terephthalate, polybutylene terephthalate, polyester, polyethylene (PE), and polypropylene (PP).

The coating solution including the foam material and the polymer material may foam and expand in volume when the ambient temperature increases, for example, to range of about 100 °C to 200 °C, 120 °C to 180 °C, or 120 °C to 170 °C.

The foam material and the polymer material may form the coating solution in a weight ratio in a range of about 1:9 to 5:5, 1:9 to 4:6, or 1:9 to 3:7.

A method of manufacturing a battery module according to an example embodiment may include providing a plurality of cells, disposing an insulation sheet between the plurality of cells such that an upper surface and a lower surface of the insulation sheet face cells adjacent thereto, respectively, and forming a foam layer on two or more side surface portions, including an upper side surface portion, of a border side surface between the upper surface and the lower surface of the insulation sheet.

In an example embodiment, in providing the plurality of cells, the manner of providing the plurality of cells may not be particularly restricted, and the plurality of cells may be appropriately provided depending on the type of battery.

In an example embodiment, an insulation sheet may be disposed between the plurality of cells. The insulation sheet may be disposed such that an upper surface and a lower surface of the insulation sheet face cells adjacent thereto, respectively.

The insulation sheet may be prepared by forming a first substrate, applying an aerogel composition to the first substrate, and forming a second substrate on the applied aerogel composition.

A detailed description of each, or of one or more, of the first substrate and the second substrate may be the same as described above, and the size and shape of each, or of one or more, substrate may be appropriately adjusted depending on the structure of the cell.

The aerogel composition may be prepared by mixing a solvent with a functional material including a binder, a dispersant, or a combination thereof to prepare a solvent mixture, mixing the solvent mixture with an aerogel to prepare an aerogel mixture, and mixing the aerogel mixture with a fibrous support to prepare an aerogel composition.

In mixing the solvent with the functional material to manufacture the solvent mixture, the solvent may be mixed with the binder, or the solvent may be mixed with the binder and the dispersant.

The solvent may be at least one of a polar solvent and a non-polar solvent.

The polar solvent may be at least one of water and an alcohol-based solvent.

Water may be at least one of, for example, purified water and deionized water.

The alcohol-based solvent may be at least one of, for example, without being limited to, methanol, ethanol, propanol, pentanol, butanol, hexanol, ethylene glycol, propylene glycol, diethylene glycol, and glycerol.

The non-polar solvent may include a hydrocarbon-based solvent. For example, the hydrocarbon-based solvent may be at least one of hexane, pentane, heptane, toluene, and benzene, and may be, without being limited to, an alkane solvent such as hexane or a mixture including an alkane solvent.

The solvent may include water. The use of water as a solvent may effectively reduce raw material costs and post-processing costs. When water is used as a solvent, however, water may not readily mix with aerogel, which is hydrophobic. In an example embodiment, the aerogel may be dispersed substantially evenly by controlling the design of a mixing .process, the mixing conditions, the addition of the binder and the dispersant, and the amount of the binder and the dispersant. The substantially even dispersion of the aerogel in the composition may enable the formation of an insulation sheet having desired, advantageous or improved thermal insulation, durability, and dustiness at a thin thickness without the use of a large amount of binder.

The solvent may be included such that the weight ratio of the solvent to the total amount of solids in the aerogel composition is in a range of about 1:1 to 1:90..For example, the weight ratio of the solvent to the total amount of solids in the aerogel composition may be in a range of about 1:50 to 1:70, 1:20 to 1:30, or 1:2 to 1:10..By controlling the weight ratio of the solvent to the total amount of solids in the aerogel composition within the above range, dispersibility, coatability, and phase stability may be kept compatible.

A detailed description of the binder and the dispersant may be similar to, or the same as described above.

In mixing the solvent mixture with aerogel to manufacture the aerogel mixture, a detailed description of the aerogel may be similar to, or the same as described above.

In mixing the aerogel mixture with the fibrous support to manufacture the aerogel composition, a detailed description of the fibrous support may be similar to, or the same as described above.

In each of mixing the solvent with the functional material including the binder, the dispersant, or the combination thereof to manufacture the solvent mixture, mixing the solvent mixture with the aerogel to manufacture the aerogel composition, and mixing the aerogel mixture with the fibrous support to manufacture the aerogel composition, the mixing may be performed using a mixer. For example, the mixer may include, without being limited to, a planetary mixer, a planetary Despa^{™} (PD) mixer, a Thinky^{™} mixer, and a C-mixer.

As an example, the planetary mixer may be used to mix the solvent mixture with the aerogel. The use of the planetary mixer to mix the solvent mixture with the aerogel may allow the aerogel to be substantially uniformly dispersed in the solvent.

The planetary mixer may be used to mix or stir different substances in order to produce a substantially homogeneous mixture. The planetary mixer may include a blade capable of performing planetary motion.

In an example embodiment, the planetary mixer may include at least one of one or more planetary blades and one or more high-speed dispersing blades. As another example, the planetary mixer may include at least one planetary blade and at least one high-speed dispersing blade.

Each of the planetary blade and the high-speed dispersing blade may continuously rotate about an axis thereof during operation. The rotation speed may be expressed in rotations per minute (rpm).

In an example embodiment, the planetary mixer may include a first blade and a second blade having different axes of rotation. For example, the first blade may be a low speed blade, and the second blade may be a high speed blade. The low speed and the high speed refer to relative rotational speeds between the first blade and the second blade. As an example, the first blade may be an open blade, and the second blade may be a Despa^{™} blade.

The rotational speed of the first blade may be, for example, in a range of about 10 rpm to 100 rpm, 10 rpm to 60 rpm, or 30 rpm to 70 rpm..The rotational speed of the second blade may be, for example, in a range of about 100 rpm to 2000 rpm, 100 rpm to 1000 rpm, 300 rpm to 1700 rpm, or 500 rpm to 1700 rpm.

When the functional material is added to and mixed with the solvent, the rotational speed of the first blade may be in a range of about 10 rpm to 60 rpm, 20 rpm to 50 rpm, or 30 rpm to 40 rpm, and the rotational speed of the second blade may be in a range of about 300 rpm to 1700 rpm, 600 rpm to 1000 rpm, or 700 rpm to 800 rpm..When the solvent and the functional material are mixed with each other, as described above, the solvent mixture in which the binder, the dispersant, or the combination thereof is substantially uniformly dispersed may be manufactured to facilitate mixing of the aerogel in a subsequent process.

When the solvent mixture and aerogel powder are mixed with each other, the rotational speed of the first blade of the mixer may be in a range of about 30 rpm to 70 rpm, 40 rpm to 70 rpm, or 60 rpm to 70 rpm, and the rotational speed of the second blade may be in a range of about 500 rpm to 1700 rpm, 600 rpm to 1600 rpm, or 800 rpm to 1500 rpm..When the aerogel powder is added to and mixed with the solvent mixture, as described above, the aerogel powder may be hindered or prevented from clumping together to induce uniform dispersion.

When the aerogel mixture and the fibrous support are mixed with each other, the rotational speed of the first blade of the mixer may be in a range from about 10 rpm to 60 rpm, 20 rpm to 50 rpm, or 30 rpm to 40 rpm, and the rotational speed of the second blade may be in a range from about 300 rpm to 1700 rpm, 400 rpm to 1500 rpm, or 800 rpm to 1200 rpm..Mixing the aerogel mixture with the fibrous support as described above may remove air bubbles in the composition, control the viscosity, and facilitate dispersion of the fibrous support in the substantially evenly dispersed aerogel, such that the aerogel surrounds the periphery of the fibrous support in the composition. A binder may be present between the aerogel and the fibrous support to improve the binding between the aerogel and the fibrous support.

By forming the insulation sheet using the method according to the example embodiment, thermal insulation of durability may be improved, the aerogel may be hindered or prevented from falling off and creating dust when the insulation sheet is manufactured or installed in an apparatus or when external vibration occurs.

In an example embodiment, forming the foam layer on the two or more side surface portions, including the upper side surface portion, of the border side surface between the upper surface and the lower surface of the insulation sheet may be performed before or after disposing the insulation sheet between the plurality of cells.

As an example, forming the foam layer may be performed before disposing the insulation sheet between the plurality of cells. In this case, after manufacturing the insulation sheet, the foam layer may be formed on the two or more side surface portions, including the upper side surface portion, of the side surface of the insulation sheet, and the insulation sheet having the foam layer formed thereon may be disposed between the plurality of cells.

The foam layer may be formed by coating, dipping, casting, or the like. The foam layer may be formed by applying a solution including a foaming agent to the two or more side surface portions, including the upper side surface portion, of the side surface of the insulation sheet and performing coating, dipping, or casting.

As another example, forming the foam layer may be performed after disposing the insulation sheet between the plurality of cells. In this case, the insulation sheet may be disposed between the plurality of cells, and the foam layer may be formed on the two or more side surface portions, including the upper side surface portion, of the side surface of the insulation sheet.

The foam layer may be formed by injection. The foam layer can be formed on the two or more side surface portions, including the upper side surface portion, of the side surface of the insulation sheet by injecting a foaming agent or a solution including the foaming agent into a battery module in which the plurality of cells and the insulation sheet are disposed using a dispenser, injector, or the like.

An example embodiment may include a battery pack including the battery module. A plurality of battery modules may be disposed in the battery pack.

Hereinafter, examples will be described. However, the following examples are intended only to illustrate or describe the disclosure and should not be construed as limiting the disclosure. Details that are not described herein may be sufficiently technically inferred by those skilled in the art, and therefore a description thereof will be omitted.

### (Manufacture of battery module)

### Example 1

### 1. Manufacture of insulation sheet

A solvent mixture was manufactured by adding polyvinyl alcohol (Sigma Aldrich), as a binder, to deionized water, as a solvent, and mixing the same at 30 rpm using an open blade and at 700 rpm using a Despa^{™} blade. Subsequently, an aerogel having a BET value of 800 m²/g was added to the solvent mixture and mixed at 70 rpm using the open blade and at 1500 rpm using the Despa^{™} blade to manufacture an aerogel mixture. An aerogel composition was manufactured by adding glass wool to the aerogel mixture and mixing the same at 30 rpm using the open blade and at 1200 rpm using the Despa^{™} blade. A planetary mixer (DNTEK, PT-005) was used for mixing.

The solids content of the manufactured aerogel composition was found to be 50 wt% of the aerogel, 40 wt% of glass wool, and 10 wt% of the polyvinyl alcohol.

A slurry of the manufactured aerogel composition was applied to a 0.3 mm thick mica sheet (Famica^{™}, Muscovite^{™}), another 0.3 mm thick mica sheet was laminated thereon in a sandwich manner, and coating was performed using a roll-rolling method.

It was found that the total thickness of the manufactured insulation sheet was 3 mm, the thickness of the aerogel layer was 2.4 mm, and the thickness of each of the mica sheets was 0.3 mm.

### 2. Manufacture of foam layer

An aqueous pyrolyzable expansion coating solution (Lord, Sipiol FR220) was applied to the entirety of a side surface of the insulation sheet using a brush to form a foam layer. It was found that the thickness of the foam layer was 0.15 mm.

### 3. Manufacture of battery module

A plurality of cells was disposed in a battery module, and the insulation sheet having the foam layer was disposed between the plurality of cells.

### Example 2

A battery module was manufactured using the same method as in Example 1 with a difference that the thickness of the foam layer was 0.25 mm.

### Example 3

A battery module was manufactured using the same method as in Example 1 with a difference that the thickness of the foam layer was 0.1 mm.

### Example 4

A battery module was manufactured using the same method as in Example 1 with a difference that the thickness of the expansion layer was 0.35 mm.

### Example 5

A battery module was manufactured using the same method as in Example 1 with a difference that a foam layer was formed such that the thickness of the foam layer formed on an upper side surface portion of a side surface of an insulation sheet was 0.2 mm and the thickness of the foam layer formed on the other side surface portions of the side surface of the insulation sheet was 0.1 mm.

### Example 6

A battery module was manufactured using the same method as in Example 1 with a difference that a foam layer was formed on only opposite side surface portions of a side surface of an insulation sheet that face upward and downward, i.e., an upper side surface portion and a lower side surface portion of the insulation sheet.

### Comparative Example 1

A battery module was manufactured using the same method as in Example 1 with a difference that an aerogel layer was formed using only an aerogel and an insulation sheet having no foam layer was disposed between a plurality of cells. In this case, the absence of a binder made it challenging to form the insulation sheet, and the effect of reducing or preventing heat propagation was not completely achieved.

### Comparative Example 2

A battery module was manufactured using the same method as in Example 1 with a difference that a foam layer was not applied to a side surface of an insulation sheet but was formed on an upper surface and a lower surface of the insulation sheet. The total thickness of the manufactured insulation sheet was the same as in Example 1, and it was found that the thickness of an aerogel layer was 2.1 mm as the foam layer was formed on the upper surface and the lower surface of the insulation sheet with a thickness of 0.15 mm.

### (Experimental Examples)

### Experimental Example 1: Evaluation of thickness increase rate of foam layer before and after foaming

The thickness increase rate of each of the foam layers manufactured in Examples 1 to 4 and Comparative Example 2 was evaluated.

For each insulation sheet having the foam layer formed thereon, the thickness of the foam layer before foaming was measured. An upper surface and a lower surface of the insulation sheet were fixed, heat was applied for 3 minutes using a micro torch such that the foam layer foamed, and the thickness of the foam layer after foaming was measured to calculate an upward thickness increase of the foam layer after foaming. Wherein the "upper thickness" may mean the thickness of the foam layer expanded to the upward direction based on the form in which the insulation sheet is disposed after foaming. The results are shown in Table 1 below.

### Experimental Example 2: Evaluation of properties of insulation sheet

### 1: Evaluation of thermal insulation

Thermal insulation of each of the insulation sheets manufactured in Examples 1 to 4 and Comparative Example 2 was evaluated. In Examples 1 to 4 and Comparative Example 2, the insulation sheet may mean an insulation sheet having a foam layer formed thereon.

Each insulation sheet was placed between a pair of opposing 1T thick aluminum plates and was placed on a heat press. An upper plate of the heat press was heated to 350 °C, and a lower plate of the heat press was not heated and was maintained at a starting temperature of 40 °C..Subsequently, a pressure of 20 kN was applied to the lower plate of the heat press, and the highest temperature of the lower plate of the heat press in 11 minutes was measured. The results are shown in Table 1 below.

### 2. Evaluation of compressibility

Compressibility of each of the insulation sheets manufactured in Examples 1 to 4 and Comparative Example 2 was evaluated. In Examples 1 to 4 and Comparative Example 2, the insulation sheet may mean an insulation sheet having a foam layer formed thereon.

The ratio of the thickness upon applying a load of 5 kN using universal testing machine (UTM) equipment to the thickness upon applying a load of 40 kN using UTM equipment was measured. The results are shown in Table 1 below.

### Experimental Example 3: Evaluation of heat propagation

Flame propagation of each of the battery modules manufactured in Examples 1 to 4 and Comparative Example 2 was evaluated.

The heat propagation evaluation was performed using a 50 Ah prismatic (NCM 811/Graphite) 2-cell simple module device having a gap of 1.5 mm between the top of each cell and an upper cover due to attachment of the upper cover under nail penetration conditions. The results are shown in Table 1 below.

**[Table 1]**

| | Example | | | | Comparative Example |
|---|---|---|---|---|---|
| | 1 | 2 | 3 | 4 | 2 |
| Foam layer thickness (mm) | 0.15 | 0.25 | 0.1 | 0.35 | 0.15 |
| Upward thickness increase after foaming (mm) | 3 | 4 | 1.2 | 4.5 | 0.5 |
| Thickness increase rate (%) | 2000 | 1600 | 1200 | 1286 | 3333 |
| Thermal insulation (°C) | 70 | 70 | 70 | 70 | 80 |
| Compressibility (%) | 40 | 40 | 40 | 40 | 30 |
| Heat propagation | No | No | Yes | No | Yes |

Referring to Table 1 above, it can be seen that, in Comparative Example 2, the foam layer was formed only on the upper surface and the lower surface of the insulation sheet, whereby an upward thickness increase of the foam layer after foaming was insignificant, and the thickness of the aerogel layer was reduced under the condition of the same total thickness of the insulation sheet, whereby both thermal insulation and compressibility were decreased, compared to Examples 1 to 4..In Examples 1 and 2, it can be seen that, the foam layer was formed on the entirety of the side surface of the insulation sheet and the thickness of the foam layer was controlled to 5% to 10% of the total thickness of the insulation sheet, whereby the efficiency of thickness increase relative to the thickness of the foam layer was desired, advantageous or improved and thermal insulation, compressibility, fire resistance, and flame retardancy were .improved.

It also can be seen that sufficient heat propagation reduction or prevention effect can be obtained even when the thickness of the foam layer on the lower side surface portion of the side surface of the insulation sheet is slightly less than the thickness of the foam layer on the upper side surface portion of the side surface of the insulation sheet, as in Example 5, or even when the foam layer is formed on only the upper side surface portion and the lower side surface portion of the side surface of the insulation sheet, as in Example 6.

Therefore, it can be seen that a battery module according to an example embodiment has a structure in which an insulation sheet is disposed between a plurality of cells and a foam layer is formed on a side surface of the insulation sheet, whereby thermal insulation, compressibility, and flame prevention effects are desired, advantageous or improved.

As is apparent from the above description, a battery module according to an example embodiment may reduce or inhibit propagation of heat and flames in a cell to cells adjacent thereto due to thermal runaway of the cell.

The insulation sheet included in the battery module according to the example embodiment may have desired, advantageous or improved thermal insulation, compressibility, mechanical strength, and dimensional stability, whereby it is possible to reduce or prevent detachment of an aerogel layer due to external impact, to improve workability, and to reduce or prevent contamination of an instrument.

While the foregoing describes example embodiments, the disclosure is not limited thereto, and it is contemplated that various modifications may be made within the scope of the claims, the detailed description of example embodiments, and the accompanying drawings, which also fall within the scope of the disclosure.

## Claims

1. A battery module comprising:
a plurality of cells (10);
an insulation sheet (20)between the plurality of cells, the insulation sheet having an upper surface and a lower surface that face cells adjacent thereto, respectively; and
a foam layer (30) formed on a border side surface between the upper surface and the lower surface of the insulation sheet (20), the foam layer being formed of two or more side surface portions including an upper side surface portion.

2. The battery module as claimed in claim 1, wherein each of the cells is a secondary battery cell, and/or wherein the insulation sheet (20) comprises:
a first substrate (21);
a second substrate (22); and
an aerogel layer (23) between the first substrate (21) and the second substrate (22).

3. The battery module as claimed in claim 2, wherein at least one of the first substrate and the second substrate comprises at least one of a resin, a metal, and an inorganic material other than the metal.

4. The battery module as claimed in claim 2 or 3, wherein the aerogel layer comprises at least one of an aerogel, a fibrous support, and a functional material including at least one of a binder and a dispersant.

5. The battery module as claimed in claim 4, wherein the aerogel has a BET specific surface area in a range of .500 m²/g to 1,000 m²/g, and/or
wherein the fibrous support comprises at least one of natural fiber, silica fiber, glass fiber, ceramic fiber, carbon fiber, graphite fiber, mineral fiber, and polymer fiber.

6. The battery module as claimed in claim 4 or 5, wherein the binder comprises an aqueous polymer binder, and/or
wherein the dispersant comprises at least one of a surfactant, a silane coupling agent, and a phosphate-based salt.

7. The battery module as claimed in any of claims 4 to 6, wherein the aerogel is included so as to account for a range of 10 wt% to 90 wt%, the fibrous support is included so as to account for a range of 5 wt% to 70 wt%, and the functional material is included so as to account for a range of .0.5 wt% to 20 wt%, based on a total amount of the aerogel layer.

8. The battery module as claimed in any of the preceding claims, wherein the foam layer comprises a foam material configured to foam when an ambient temperature increases to a range of 100 °C to 200 °C.

9. The battery module as claimed in any of the preceding claims, wherein the foam layer (30) comprises at least one of expanded graphite, an organic foaming agent, and an inorganic foaming agent, and/or,
wherein
the organic foaming agent comprises at least one of azodicarbonamide, dinitropentamethylenetetramine, and oxybis(benzenesulfonyl hydrazide), and
the inorganic foaming agent comprises at least one of hydrogen carbonate, carbonate, and salts of organic acids.

10. The battery module as claimed in any of the preceding claims, wherein a thickness of the foam layer is in a range of .3% to 20% of a thickness of the insulation sheet, and/or,
wherein a thickness of the foam layer after foaming is in a range of .1000% to 3000% of the thickness of the foam layer before foaming.

11. The battery module as claimed in claim 1, wherein the foam layer (30) is formed on opposite side surface portions of the side surface of the insulation sheet (20) that face upward and downward, and the foam layer is formed on the entirety of the side surface of the insulation sheet.

12. The battery module as claimed in claim 11, wherein a thickness of the foam layer formed on the upper side surface portion of the side surface of the insulation sheet is at least 100% of the thickness of the foam layer formed on a lower side surface portion of the side surface of the insulation sheet.

13. A method of manufacturing a battery module of any of the preceding claims, the method comprising:
providing a plurality of cells (10);
disposing an insulation sheet (20) between the plurality of cells such that an upper surface and a lower surface of the insulation sheet face cells adjacent thereto, respectively; and
forming a foam layer (30) ona border side surface between the upper surface and the lower surface of the insulation sheet, the foam layer (30) being formed of two or more side surface portions including an upper side surface portion.

14. The method as claimed in claim 13, wherein forming the foam layer is performed one of before and after disposing the insulation sheet between the plurality of cells.

15. A battery pack comprising the battery module as claimed in any one of claims 1 to 12.
